# EUROPEAN PATENT APPLICATION

(11) **EP 2 447 153 A1**
(43) Date of publication of application: **02.05.2012**
(21) Application number: 10189270.1
(22) Date of filing: 28.10.2010
(51) Int. Cl.: B64C 11/18, B64C 21/10, B64C 27/467, B63H 5/00

(54) **Method of enhancing the output efficiency of a propeller and reducing the noise thereof**

(71) Applicant: Lin, Zuei-Ling, Taipei City 10567 (TW)
(72) Inventor: Lin, Zuei-Ling, Taipei City 10567 (TW)
(74) Representative: Dossmann, Gérard

(57) **Abstract**

A method of enhancing the output efficiency of a propeller ( 10) and reducing the noise thereof wherein a plurality of small cavities (31) are formed on the whole or at least a portion of a blade skin (20) of the propeller (10). When the propeller (10) is rotated and a fluid (40) passes through the small cavities (31), a plurality of small vortexes (33) are created at the blade skin (20) to form a thin turbulent boundary layer (30) that allows an advantageous interference acting on a turbulence of the fluid (40) at the blade skin (20). In this way, a portion of fluid (40) is not in contact with the blade skin (20), and a viscous drag acting on the blade skin (20) is reduced to extend a wake (41) and reduce a drag force of the wake (41). The aforementioned mechanism can enhance the output efficiency of a propeller (10) and reduce the noise thereof.

## Description

The invention relates to an airscrew or a propeller, and more particularly to a method of enhancing the output efficiency of a propeller and reducing the noise thereof.

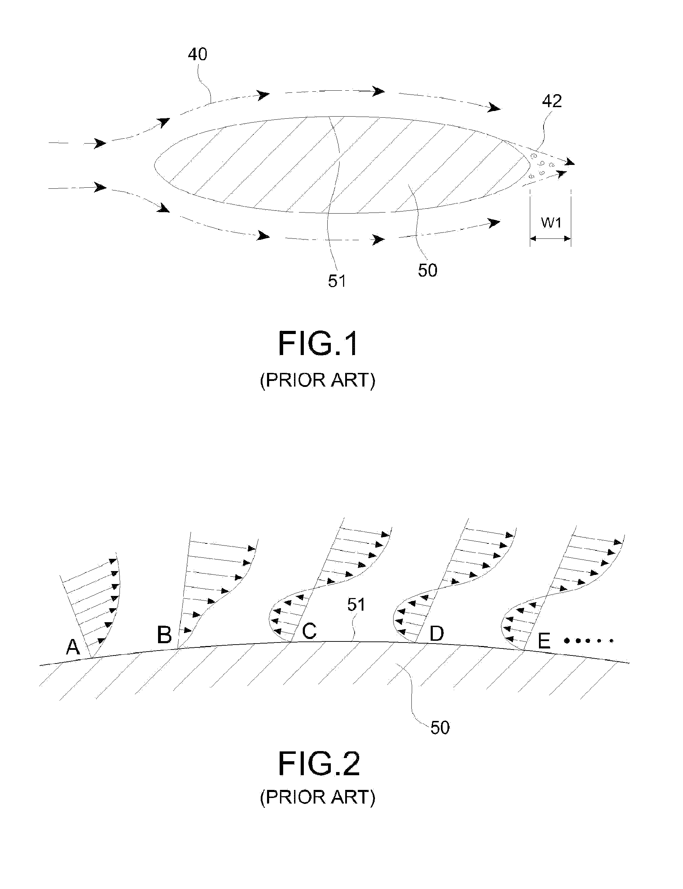

The rotating blades of the propeller have a high rotational speed. Conventional concepts believe that a smoother surface of these blades produces less frictional resistance with a fluid. However, the actual practice is not so. In FIGS. 1 and 2, if a fluid 40 is passed through Point A of a flat surface of the blade 51 of the propeller 50 smoothly, the viscous drag acting on the surface of the blade obscures the traveling of the fluid 40 to produce a flow field boundary layer instantly, so as to affect and shift a flowing point of the fluid 40 backward. The resistance produced by shifting the flowing point of the fluid 40 backward is called a reverse pressure which is also known as a resistance of the fluid. When the flowing point of the fluid 40 shifts to Point B, a separation of the boundary layer occurs, and turbulences are produced at flow field Points C, D and E, and thus the traveling speed of the blades will be retarded. Further, when the fluid is passed through the smooth blades skin 51 of the propeller 50, a wake 42 thereof produces a larger drag force of the wake 42 due to a shorter distance W1. As a result, a very strong resistance of the fluid resistance is produced.

Accordingly, the output efficiency of the propeller is affected. Moreover, the noise is correspondingly increased. Therefore, a further improvement is required.

The term "Fluid" used in the following description of the present invention includes air and water.

The term "Propeller" used in the following description of the present invention includes: boat/ship propeller, helicopter propeller, helicopter tail rotor propeller, aircraft propeller, jet engine propeller, jet engine pressurizer rotor and jet engine turbine rotor etc. In other words, the assemblies which can be operated for propulsion as well as the blade, impeller and the turbine rotor thereof are also included.

The primary objective of the present invention is to provide a method of enhancing the output efficiency of a propeller and reducing the noise thereof, and the method forms a plurality of small cavities on an blade skin by a non-destructive measure, and produces a plurality of small vortexes at the blade skin to form a thin turbulent boundary layer when a fluid is passed through the plurality of small cavities, so as to allow an advantageous interference to turbulences of the fluid at the blade skin, such that a portion of fluid is not in contact with the blade skin, and a viscous drag acting on the rotating blade skin is reduced. Accordingly, the fluid passes through the surface of the blades rapidly, thereby achieving the effect of enhancing the output efficiency of the propeller.

Another objective of the present invention is to use the aforementioned thin turbulent boundary layer that permits an advantageous interference acting on the fluid turbulence, such that the fluid elongates the wake along the blade skin, and the elongated wake can reduce the drag force of the wake of the rotating blade such that the output efficiency of the propeller is further enhanced.

With the small vortexes, the turbulent boundary layer and the elongated wake, the efficiency of the propeller is enhanced. Meanwhile, the noise tends to be reduced.

Since the present invention adopts a non-destructive measure, the surface of the blade skin will remain unchanged, and no damage will occur at the blade skin. The invention not only provides a quick and convenient way for the mounting work, but also protecting the structure of the blade from damages or metal fatigues. The invention also provides a safety use and achieves the effects of a faster traveling speed and a larger power.

The accomplishment of this and other objects of the invention will become apparent from the following descriptions and its accompanying figures of which:
FIG. 1 is a schematic view showing a flow of a fluid on a surface of a conventional propeller;
FIG. 2 is a schematic view of a process of separating a fluid from a surface of a conventional propeller;
FIG. 3 is a schematic view of forming small cavities of the present invention;
FIG. 4 is a cross-sectional view of forming a turbulent boundary layer of the present invention;
FIG. 5 is an enlarged view of a portion of FIG. 4;
FIG. 6 is a schematic view of comparing air flows of a conventional propeller with a propeller of the present invention;
FIG. 7 is a schematic view of comparing processes of separating air of a conventional propeller with a propeller of the present invention; and
FIGS. 8A through 8D are applications of the invention to different propellers in use.

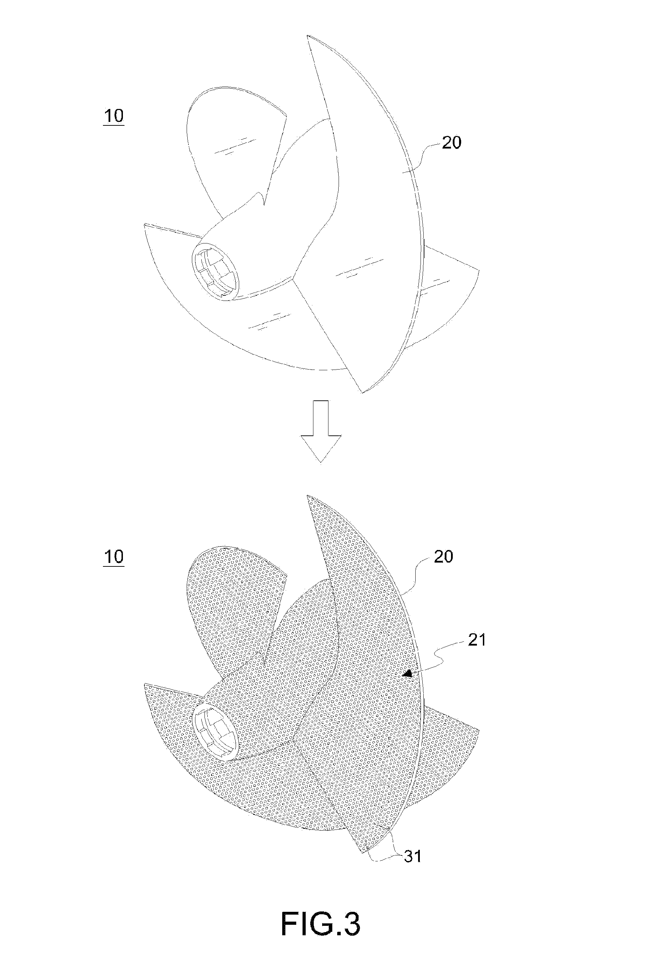

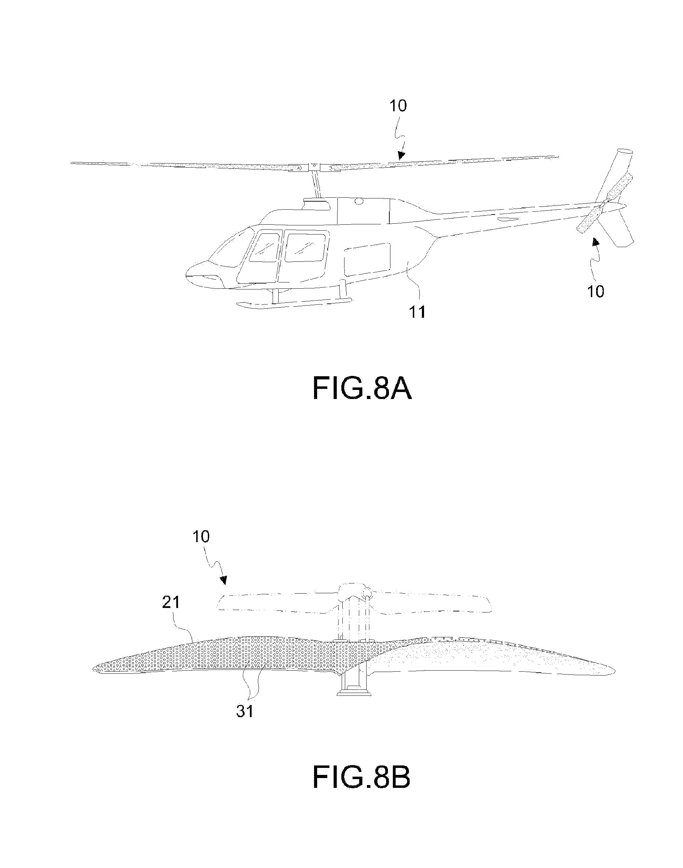

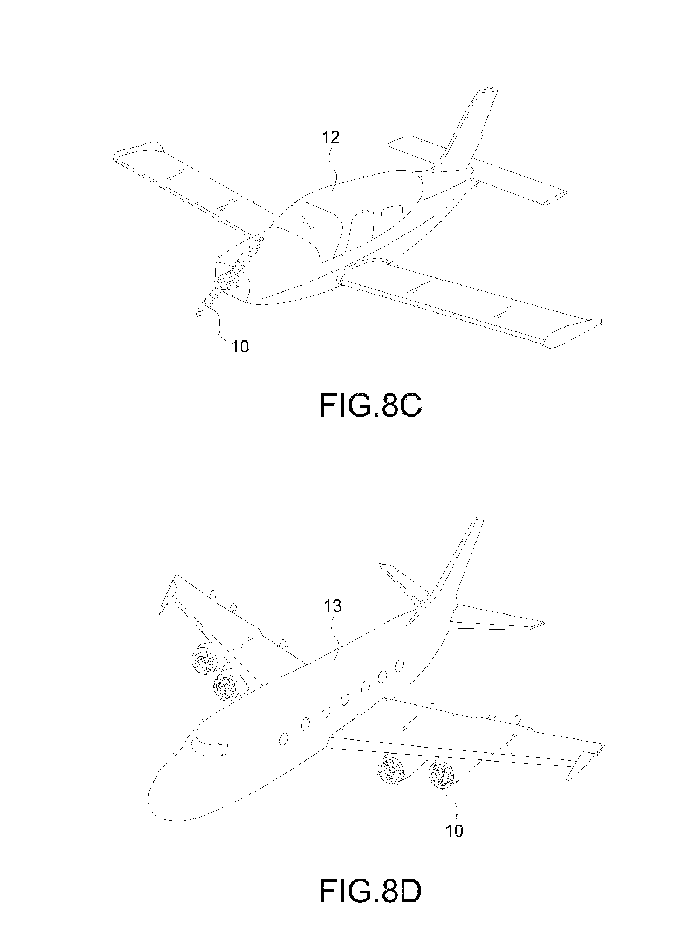

In addition to the application to the boat/ship propeller shown in FIG. 3, the propeller 10 of the present invention is also applied to the propeller and the tail rotor propeller of a helicopter 11 (see FIGS. 8A and 8B); the propeller of a propeller aircraft 12 and the jet engine propeller of a jet engine aircraft 13 (see FIGS. 8C and 8D), etc.

The foregoing propeller 10 produces frictional resistance between a blade skin of and a fluid (air and water). Therefore, the present invention utilizes the design on a blade skin 20 of the propeller 10 for reducing the traveling resistance. A preferred embodiment of the present invention as shown in FIGS. 3 to 7 is described as follows:
In this preferred embodiment, a blade skin 20 of a propeller 10 is disclosed, and a plurality of small cavities 31 is formed on the whole or at least a portion of the blade skin 20, such that when a fluid 40 is passed through the plurality of small cavities 3 l, a plurality of small vortexes 33 is produced at the blade skin 20, and the plurality of small vortexes 33 produces a thin turbulent boundary layer 30 on the blade skin 20 to achieve an advantageous interference to a fluid turbulence at the blade skin 20 and separate the fluid 40 from a portion of the blade skin 20 to reduce the viscous drag of the fluid 40 acting onto the blade skin 20, so as to pass the fluid 40 through the blade skin 20 quickly and achieve the effect of reducing the traveling resistance. The aforementioned turbulent boundary layer 30 permits an advantageous interference to the fluid turbulence, such that the fluid 40 pulls a wake 41 along the blade skin 20 to a longer distance W2, and the elongated wake can reduce the drag force of the wake of the blade skin 20. Therefore, the present invention combines with the three foregoing mechanisms (including the small vortexes 33, the turbulent boundary layer 30 and the elongated wake 41) to enhance the output efficiency of the propeller 10 and to reduce the noise thereof.

The small cavities 31 of the blade skin 20 of the present invention can be formed by a non-destructive measure, such that the structure of a propeller will not be changed or damaged to assure the safety of the blade, and propellers exiting the factory can use the present invention easily.

In one of the feasible embodiments for forming the plurality of small cavities 31 on the blade skin 20 by the non-destructive measure in accordance with the present invention, methods including coating, printing, or a combination of the above can be used to attach to a thin layer 21 formed by the blade skin 20, wherein the thin layer has a thickness of 0.001 mm to several mm. In this preferred embodiment, the thin layer 21 is a paint disposed on the blade skin 20 by coating or together with screen printing.

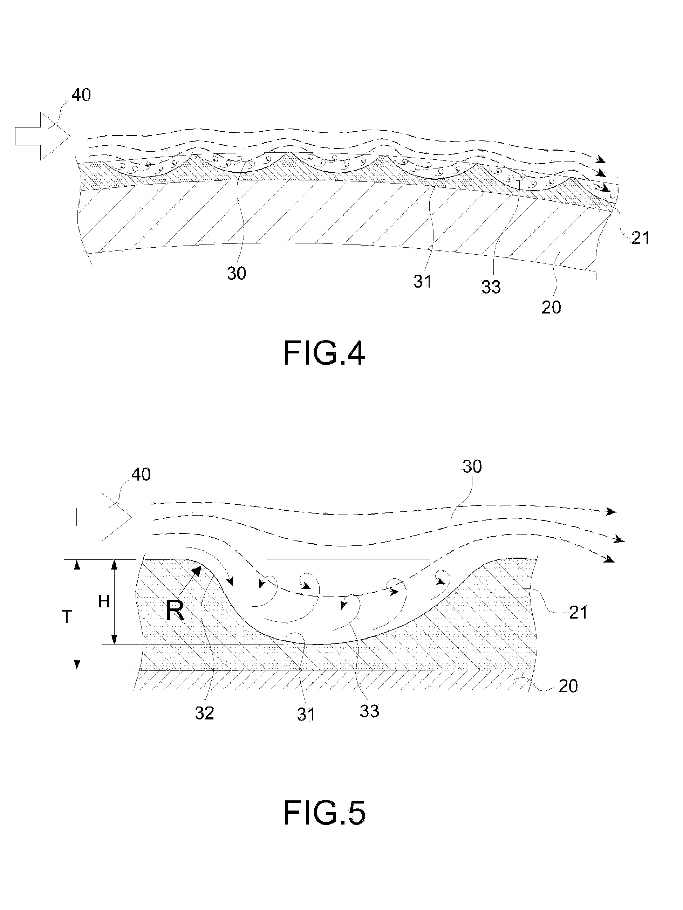

With reference to FIGS. 4 and 5, a plurality of small cavities 31 in a predetermined geometric shape such as a strip shape, a polygonal shape, a circular shape, and an elliptical shape, or other geometric shapes is formed on a surface of the thin layer 21, and the small cavities 31 of a preferred embodiment have a concave arc shape with a lower middle. The concave arc shaped front edge facing towards the fluid 40 includes a circular shape 32 that allows an air flow 40 to be introduced into the small cavities 31 smoothly to form a plurality of small vortexes 33 in the cavities 31.

Moreover, the plurality of small cavities 31 has a depth of 0. 00 1 me 10 mm and an area of 0.001 mm2 100 mm², and a higher density of small cavities 31 1 provides a better effect of reducing the resistance. In a preferred embodiment, an interval between two adjacent small cavities is not greater than the maximum diameter or width of the small cavities 31, such that the small cavities are distributed densely and have a depth of 0.001 mm-10 mm and an area of 0.001 1 mm ²∼100 mm²_{.}

Therefore, the plurality of small vortexes 33 formed in the plurality of small cavities 31 respectively is changed from points to a plane to form a turbulent boundary layer 30 naturally. As to the width of the small cavities 31, the width, depth and area of the cavities can be designed according to the operating speed of the blade and the surface area of the blade to optimize the turbulent boundary layer 30 created thereby.

Further, in FIG. 5, the plurality of small cavities 31 of the present invention has a depth H not greater than the thickness T of the thin layer 21. For example, if the thickness T of the thin layer 21 is 2 mm, then the maximum depth H of the small cavities 31 is from 1.0 mm to less than 2.0 mm, and preferably 1.5 mm-1.8 mm, but not limited to such arrangements only. As a result, most of the areas at the bottom of the thin layer 21 are combined with the blade skin 20 to improve the adhesiveness.

In addition, the thin layer 21 is fixed onto the blade skin 20 by a paint coating/printing method. If the coating/printing method is adopted, the small cavities 31 are formed by use of a screen at the same time without any problems. The paint or coating material is resistant to high/low temperature and corrosion.

The plurality of small cavities 31 formed on the blade skin 20 in accordance with the present invention by the aforementioned thin layer 21 can be formed also by a mold casting method, by a lathe or by a demolding forming method, etc. The small cavities 31 can be formed on a surface of the blade skin 20 only, so that the structure and strength of the blade will not be destroyed. As a result, the plurality of small cavities 31 as well as the plurality of small vortexes 33 can be formed naturally to create a thin turbulent boundary layer 30, and its characteristics and effects are the same as the aforementioned method, and thus will not be repeated here.

With the technical characteristics of the present invention as disclosed above, the present invention has the following advantages and effects:
1. When the fluid 40 is passed through the plurality of small cavities 31, the turbulent boundary layer 30 is formed on the blade skin 20 naturally, so that it is not necessary to have a turbulator to achieve the effect of interference acting on the air current at the surface, and it is a convenient, efficient and effective method.

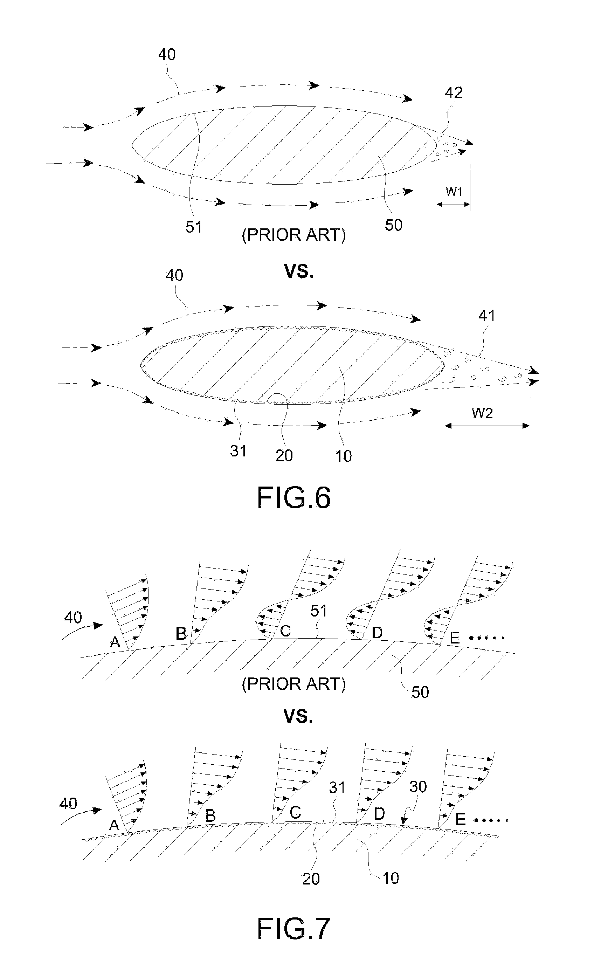

2. In FIG. 6, the lower figure shows the fluid flow of a propeller 10 of the present invention and the upper figure shows the fluid flow of a propeller of the prior art of FIG. 1, and these figures compare the present invention with the prior art. The present invention can reduce the viscous drag of the fluid 40 acting onto the blade skin 20 and elongate the wake 41. In other words, the present invention changed the conventional wake 42 from a shorter distance W and extended it backward to a longer distance W2, so as to achieve the effect of reducing the drag force of the wake 41 of the blade skin 20. The invention not only increases the speed, but also reduces the consumption of energy.
3. In FIG. 7, the lower figure shows a separation process of the fluid from the blade during the use of the present invention, and the upper figure shows a separation process of the fluid from the blade during the use of prior art as shown in FIG. 2, and these figures compare the present invention with the prior art. In the prior art, when the fluid is passed through a surface of the blade 51 of the propeller 50 and shifted from Point A to Point B, a separation point occurs at the boundary layer, and then turbulences are produced at flow field Points C, D and E after Point B. On the other hand, when the fluid of the present invention is passed through a surface of the propeller 10, the fluid is situated at flow field Point A first, and soon a boundary layer shows up on the blade skin 20 of the propeller 10 as indicated by flow field Point B. Since the blade skin 20 of the present invention has a plurality of small cavities 31 provided for forming the turbulent boundary layer 30, therefore the fluid flowing to flow field Points C, D, and E after Point B will not produce a turbulence (as produced by the fluid of the prior art and shown in the upper figure of FIG. 7), so as to reduce the resistance (acting on the blade skin 20) as well as the noise in the area of the blade skin 20 effectively.
4. The present invention adopts a non-destructive measure to form the plurality of small cavities in order to create the turbulent boundary layer 30, and such arrangement not only provides a safety use, but also provides a quick, convenient and cost-effective application.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A method of enhancing the output efficiency of a propeller (10) and reducing the noise thereof, comprising the steps of:
a) forming a plurality of small cavities (31) on the whole or at least a portion of an blade skin (20) by a non-destructive measure;
b) producing a plurality of small vortexes (33) at the blade skin (20) to form a thin turbulent boundary layer (30) when a fluid (40) passes through the plurality of small cavities (31) such that a viscous drag acting on the blade skin (20) is reduced to extend a wake (41) and reduce a drag force acting on the wake (41); and
c) producing a plurality of small vortexes (33) by use of the small cavities (31) by which a thin turbulent boundary layer (30) is created to partially prevent the fluid (40) from contact with the blade skin (20), thereby reducing the noise.

2. The method of enhancing the output efficiency of a propeller (10) and reducing the noise thereof as recited in claim 1, wherein the plurality of small cavities (31) is in a predetermined shape selected from the collection of a strip shape, a polygonal shape, a circular shape, an elliptical shape and other geometric shapes, and the small cavities (31) are in a concavely arc shape having a lower middle.

3. The method of enhancing the output efficiency of a propeller (10) and reducing the noise thereof as recited in claim 2, wherein the plurality of small cavities (31) are densely distributed, and each small cavity (31) has a depth of 0.001 1 mm- 10 mm and an area of 0.001 mm2∼100 mm².

4. The method of enhancing the output efficiency of a propeller (10) and reducing the noise thereof as recited in claim 3, wherein the plurality of small cavities (31) of the blade skin (20) attached and fixed onto a thin layer (21) of the blade skin (20) by the paint coating/printing method, and the plurality of small cavities (31) formed by the thin layer (21) has a maximum height (H) not exceeding the thickness (T) of the thin layer (21).

5. The method of enhancing the output efficiency of a propeller (10) and reducing the noise thereof as recited in claim 3, wherein the small cavities (31) are formed directly on the blade skin (20) by a mold casting method, by a lathe or by a demolding forming method.
